# DEMANDE DE BREVET EUROPEEN

(11) **EP 4 708 253 A1**
(43) Date de publication de la demande: **11.03.2026**
(21) Numéro de dépôt: 25199829.0
(22) Date de dépôt: 03.09.2025
(51) Int. Cl.: G08G 5/21, G08G 5/22, G08G 5/26, G08G 5/51, G06Q 10/06, G06Q 10/20, G06Q 50/40, G07C 5/08

(54) **PROCÉDÉ ET SYSTÈME D'AIDE À LA DÉCISION D'EXPLOITATION D'UN AÉRONEF**

(30) Priorité: 05.09.2024 FR 2409441
(71) Demandeur: Airbus (S.A.S.), 31700 Blagnac (FR); AIRBUS OPERATIONS (S.A.S.), 31060 Toulouse (FR)
(72) Inventeur: COURMONT, Nathalie, 31060 TOULOUSE (FR); HOEPFFNER, Julien, 31060 TOULOUSE (FR); FERRAN, Olivier, 31700 BLAGNAC (FR)
(74) Mandataire: Cabinet Le Guen Maillet

(57) **Abrégé**

Il est proposé un procédé d'aide à la décision d'exploitation d'un aéronef (100), exécuté par trois calculateurs, pendant une mission courante. Le premier calculateur (C1) détermine automatiquement, en fonction d'une information de défaillance, d'un statut technique de l'aéronef et d'une liste minimale d'équipements, le ou les éléments MEL impliqués et, pour chacun, la ou les options de départ applicables. Le deuxième calculateur (C2) détermine automatiquement, en fonction des éléments précités fournis par le premier calculateur et d'un ensemble de missions futures à répartir sur une flotte d'aéronefs, une proposition de scénario (incluant, dans le cas d'un départ sous élément(s) MEL, une sélection d'option(s) de départ pour chaque élément MEL impliqué). Le troisième calculateur (C3) reçoit une décision du pilote, d'acceptation ou de refus de la proposition de scénario, et en cas d'acceptation, déclenche la réalisation de certaine(s) tâches dans l'aéronef et met à jour le journal de bord.

## Description

### DOMAINE TECHNIQUE

Le domaine de l'invention est celui de la gestion de l'exploitation des aéronefs, en particulier lorsque ceux-ci présentent au cours d'une mission courante une défaillance technique pouvant impacter des missions futures.

Plus précisément, la présente invention concerne un procédé et un système d'aide à la décision d'exploitation d'un aéronef, ainsi qu'un produit programme d'ordinateur permettant la mise en œuvre d'un tel procédé.

### ETAT DE LA TECHNIQUE ANTERIEURE

Dans le cadre des opérations quotidiennes d'un aéronef, des défaillances techniques peuvent se produire, et celles-ci peuvent avoir un impact sur l'exécution de missions (c'est-à-dire de vols) par l'aéronef. En effet, pour des raisons de sécurité, avant le décollage d'un aéronef pour effectuer une nouvelle mission, le pilote (commandant de bord) doit s'assurer de la fonctionnalité des différents équipements de cet aéronef avant de décider d'autoriser ou non le départ (« dispatch » en anglais) de l'aéronef pour cette nouvelle mission.

Pour aider le pilote à effectuer un diagnostic de l'aéronef, des capteurs et des dispositifs de contrôle sont mis en œuvre. Le pilote est ainsi alerté lorsqu'une défaillance technique (ou panne) est détectée. Il peut s'agir d'une nouvelle défaillance ou bien d'une défaillance déjà détectée au cours d'une mission précédente mais que la maintenance n'a pas pu corriger, par exemple par manque de temps ou de ressources. Par défaillance technique, on entend le fait qu'un équipement ou une fonction de l'aéronef est inopérant(e), c'est-à-dire ne remplit pas de manière satisfaisante le rôle pour lequel il ou elle a été conçu(e), quelle qu'en soit la raison (par exemple : ne fonctionne pas du tout, ne remplit pas une ou plusieurs des fonctions pour lesquelles il ou elle a été conçu(e), ne fonctionne pas toujours dans les limites ou tolérances de fonctionnement pour lesquelles il ou elle a été conçu(e), n'est pas disponible en raison d'une défaillance primaire, etc.).

Afin d'éviter que chaque défaillance se traduise par une coûteuse interruption d'exploitation de l'aéronef, le pilote dispose d'un document (version papier ou électronique) appelé MEL (pour « Minimum Equipment List » en anglais, ou « Liste Minimale d'équipements » en français). Le contenu de la MEL permet d'identifier les conditions dans lesquelles l'aéronef peut être exploité malgré l'existence de défaillance(s), tout en garantissant que la sécurité de l'aéronef n'est pas compromise. Ainsi, le concept de MEL permet de continuer à utiliser un aéronef avec certains instruments, équipements ou fonctions inopérants ou manquants, et ce pour une période limitée (durée variable selon la gravité des conséquences) jusqu'à ce que la réparation puisse être réalisée.

Pour une nouvelle mission, la MEL doit être appliquée avant le début du vol (avant la phase de roulage (« taxi phase » en anglais) ou avant la phase de décollage (« take-off phase » en anglais) de l'aéronef, suivant la réglementation en vigueur), et acceptée par le pilote.

La MEL regroupe sous forme de liste l'ensemble des équipements ou fonctions qui peuvent être inopérant(e)s pour opérer une nouvelle mission (nouveau vol). Chaque élément de la liste (aussi appelé « élément MEL », ou « MEL item » en anglais) comprend un identifiant et un libellé d'une défaillance technique (concernant un équipement ou une fonction inopérant(e) de l'aéronef), et définit une durée maximale admissible de l'état de défaillance, un nombre d'occurrence de l'équipement ou de la fonction objet de la défaillance, un nombre minimal d'occurrences nécessaire au vol sous dérogation et, le cas échéant, une ou plusieurs conditions de départ appelées « options de départ » (« dispatch conditions » en anglais) de l'aéronef pour la nouvelle mission. Chaque élément MEL peut également définir des procédures spécifiques que doit appliquer l'équipage en présence de la défaillance associée.

Les options de départ peuvent consister en l'état d'un ou plusieurs équipements ou fonctions ; par exemple, état opérationnel (opérationnel ou hors service), position fonctionnelle (ouvert, fermé, marche, arrêt, etc.) ou état de sélection de sa commande (allumé, éteint, ouverture, fermeture, etc.). Les options de départ peuvent également consister en une combinaison logique des états de plusieurs équipements ou fonctions. Les options de départ peuvent également viser des limitations d'utilisation opérationnelle telles qu'une altitude ou un niveau de vol limité ou une pénalité sur les performances de l'aéronef.

Dans une utilisation classique de la MEL, avant un départ de l'aéronef pour une nouvelle mission, les étapes suivantes doivent être mises en œuvre par un opérateur de maintenance, pendant le temps de rotation de l'aéronef (TAT, pour « Turn Around Time » en anglais), pour s'assurer que l'aéronef peut partir en état de navigabilité (« airworthy condition » en anglais) :
- détection de la défaillance (par exemple par alertes ECAM (« Electronic Centralized Aircraft Monitoring »), par observations (par l'équipage ou le personnel de maintenance), etc.) ;
- signalement de la défaillance : tout équipement ou fonction inopérant(e) de l'aéronef doit être signalé(e) dans le journal de bord (« logbook » en anglais) de l'aéronef, par l'équipage ou le personnel de maintenance ;
- identification de l'élément MEL associé à la défaillance détectée, par mise en correspondance de la défaillance détectée avec les différentes entrées de la MEL ;
- examen des options de départ (dispatch conditions) définies dans l'élément MEL identifié ;
- décision de réparation ou de départ (dispatch) de l'aéronef en fonction de l'élément MEL identifié et du statut technique de l'aéronef (comprenant des données techniques relatives au fonctionnement d'équipements et fonctions de l'aéronef) ; et
- en cas de départ sous l'élément MEL identifié, enregistrement dans le journal de bord de l'élément MEL identifié ainsi que d'une (ou plusieurs) option(s) de départ qui a (ont) été sélectionnée(s) (Dispatch Condition(s)).

Les éléments de la MEL peuvent correspondre à l'un des trois types de statut de départ suivants :
- un statut de départ dit « GO » qui correspond à un départ sans condition, mais avec une limite de temps ;
- un statut de départ dit « GO IF », avec une ou plusieurs option(s) de départ correspondant à une ou plusieurs condition(s) qui doi(ven)t être remplie(s) pour permettre le départ de l'aéronef ; et
- un statut de départ dit « NO GO » qui correspond à une situation dans laquelle l'aéronef doit être réparé et ne peut pas partir sous MEL.

Une communication avec un agent d'opérations aériennes (« flight dispatcher » en anglais) ou un agent du centre de contrôle de maintenance (MCC, pour « Maintenance Control Center » en anglais) de l'exploitant peut aider le pilote à évaluer l'élément de la MEL et décider s'il poursuit ou non le vol. Mais c'est au pilote qu'il incombe de prendre la décision finale pour la nouvelle mission (décision du statut de départ : « NO GO », « GO » ou « GO IF »), et par exemple d'accepter le départ de l'aéronef sous l'élément MEL identifié (cas « GO » ou « GO IF »).

Dans le cas « GO IF », pour le premier départ (première mission) de l'aéronef sous l'élément MEL identifié, toutes les options de départ et les limitations associées doivent être prises en compte et toutes les procédures de maintenance (m) et d'exploitation (o) pertinentes doivent être appliquées pour maintenir un niveau de sécurité acceptable pour l'exploitation de l'aéronef.

Toujours dans le cas « GO IF », pour les missions suivantes de l'aéronef sous le même élément MEL identifié, l'équipage doit vérifier que tout élément MEL ouvert dans le carnet de bord se trouve dans la fenêtre de l'intervalle de réparation et que ce délai ne sera pas dépassé au cours de la prochaine mission. Pour chaque mission suivante, lorsque les options de départ sont acceptées par le pilote, toutes les procédures opérationnelles nécessaires doivent également être appliquées.

Il est à noter que la MEL est prévue pour être appliquée avant un départ de l'aéronef pour une nouvelle mission. Elle n'est donc pas prévue pour être appliquée en cas de défaillance en cours de vol.

Selon une solution actuelle, quand une défaillance technique est détectée pendant le vol (c'est-à-dire pendant une mission courante), une description détaillée de la défaillance détectée est consignée dans le journal de bord, et l'agent d'opérations aériennes (flight dispatcher) et/ou le centre de contrôle de maintenance (MCC) de l'exploitant est/sont prévenu(s), afin qu'un mécanicien puisse intervenir à l'arrivée de l'aéronef. Plus précisément, le mécanicien au sol doit attendre l'arrivée de l'aéronef pour, pendant le temps de rotation de l'aéronef (TAT), analyser et évaluer le statut technique de l'avion et consulter la MEL en fonction de la défaillance détectée pendant le vol (qui vient de se terminer), afin d'une part d'apprécier la possibilité d'un départ sous élément MEL pour une mission suivante et d'autre part effectuer des tâches de maintenance (m) définies dans le manuel de maintenance de l'aéronef (AMM, pour « Aircraft Maintenance Manual » en anglais) pour configurer l'avion pour cette mission suivante. Le pilote de la mission suivante devra également, en cas de départ sous élément MEL, effectuer des procédures opérationnelles (o) dans certaines phases de vol, en plus des procédures opérationnelles standard (SOP, pour « Standard Operating Procedures » en anglais).

Il apparaît que la solution actuelle précitée, pour apprécier la possibilité d'un départ sous élément MEL pour une mission suivante, dans le cas où une défaillance technique a été détectée pendant la dernière mission, donne satisfaction, mais il existe un besoin de l'améliorer encore.

Notamment, il existe un besoin de fournir une solution offrant au moins un des avantages suivants par rapport à la solution actuelle précitée, dans le cas où une défaillance technique est détectée en vol (c'est-à-dire pendant une mission courante) :
- s'affranchir du besoin d'avoir un mécanicien et ne pas impacter le temps de rotation de l'aéronef (TAT), pour l'évaluation de la possibilité de départ sous élément MEL pour les missions suivantes de l'aéronef ;
- permettre d'anticiper l'évaluation de la possibilité de départ sous élément MEL ;
- permettre à l'opérateur (compagnie aérienne) d'anticiper la tenue ou l'adaptation des plannings des vols (missions) de sa flotte d'aéronefs ;
- s'affranchir (partiellement ou complètement) du besoin d'avoir un mécanicien pour reconfigurer l'aéronef en cas de départ sous élément MEL pour les missions suivantes de l'aéronef ; et
- faciliter l'analyse de la situation par les pilotes des vols suivants de l'aéronef lors de leur préparation desdits vols suivants.

### EXPOSE DE L'INVENTION

Il est proposé un procédé d'aide à la décision d'exploitation d'un aéronef, le procédé étant exécuté pendant une mission courante de l'aéronef et comportant :
- dans un premier calculateur, implémenté dans l'aéronef ou dans une sacoche électronique ou au sol, et comprenant une circuiterie électronique :
   - recevoir une information de défaillance, mentionnant au moins une défaillance technique de l'aéronef ;
   - pour chaque défaillance technique mentionnée, déterminer, par consultation d'une base de données comprenant une liste minimale d'équipements, un ou plusieurs éléments de la liste minimale d'équipements, dits éléments MEL, impliqués par ladite défaillance technique, chaque élément MEL impliqué concernant un équipement ou une fonction inopérant(e) de l'aéronef et définissant une ou plusieurs options de départ de l'aéronef pour une éventuelle mission à venir ;
   - recevoir un statut technique de l'aéronef, comprenant des données techniques relatives au fonctionnement d'équipements ou de fonctions de l'aéronef ; et
   - pour chaque élément MEL impliqué, déterminer, en fonction du statut technique de l'aéronef, une ou plusieurs options de départ applicables parmi la ou les options de départ définies dans ledit élément MEL impliqué ;
- dans un deuxième calculateur, installé au sol et comprenant une circuiterie électronique :
   - recevoir, en provenance du premier calculateur, la ou les options de départ applicables pour chaque élément MEL impliqué ; et
   - déterminer une proposition de scénario, en fonction d'une part de la ou les options de départ applicables pour chaque élément MEL impliqué et d'autre part d'un ensemble de missions futures à répartir sur une flotte d'aéronefs comprenant ledit aéronef, ladite proposition de scénario comprenant : une décision de réparation de l'aéronef ou de départ de l'aéronef sous le ou les éléments MEL impliqués et, en cas de décision de départ sous le ou les éléments MEL impliqués : une ou plusieurs missions futures attribuées à l'aéronef ; pour chaque élément MEL impliqué, une ou plusieurs options de départ sélectionnées parmi la ou les options de départ applicables ; et une ou plusieurs éventuelles tâches à effectuer dans l'aéronef, appartenant au groupe comprenant : une ou des reconfigurations de systèmes à réaliser, une ou des limitations opérationnelles à respecter, et une ou des inspections ou vérifications à effectuer ;
- dans un troisième calculateur, implémenté dans l'aéronef ou dans une sacoche électronique, et comprenant une circuiterie électronique :
   - recevoir, en provenance du deuxième calculateur, la proposition de scénario ;
   - recevoir une décision d'un pilote de l'aéronef, d'acceptation ou de refus de la proposition de scénario ; et
   - en cas de décision d'acceptation, déclencher la réalisation de la ou les éventuelles tâches à effectuer dans l'aéronef et mentionner dans un journal de bord : ladite au moins une défaillance technique de l'aéronef ; un nouvel état opérationnel courant de l'aéronef indiquant la décision de départ sous le ou les éléments MEL impliqués pour la ou les missions futures attribuées à l'aéronef ; pour chaque élément MEL impliqué, la ou les options de départ sélectionnées parmi la ou les options de départ applicables ; et un statut d'exécution de la ou les éventuelles tâches à effectuer dans l'aéronef.

Ainsi, le procédé proposé est exécuté par des premier, deuxième et troisième calculateurs, pendant une mission courante de l'aéronef au cours de laquelle est détectée une défaillance technique. Le premier calculateur permet de déterminer automatiquement, en fonction de l'information de défaillance, du statut technique de l'aéronef et de la liste minimale d'équipements (MEL), le ou les éléments MEL impliqués et, pour chacun, la ou les options de départ (dispatch conditions) applicables. Le deuxième calculateur permet de déterminer automatiquement, en fonction des éléments précités fournis par le premier calculateur (élément(s) MEL impliqué(s) et option(s) de départ applicable(s)) et d'un ensemble de missions futures à répartir sur une flotte d'aéronefs, une proposition de scénario (incluant, dans le cas où un départ sous élément(s) MEL est proposé pour une ou plusieurs missions, une sélection d'option(s) de départ pour chaque élément MEL impliqué). Le troisième calculateur permet de recevoir une décision du pilote, d'acceptation ou de refus de la proposition de scénario fournie par le deuxième calculateur et, en cas d'acceptation, de déclencher la réalisation (éventuellement de manière automatique, comme discuté plus bas) de certaine(s) tâches dans l'aéronef et de mettre à jour le journal de bord.

La solution proposée présente plusieurs avantages, notamment ceux détaillés ci-après.

Elle présente une forte automatisation, du fait que le procédé est exécuté par trois calculateurs qui coopèrent entre eux. Par conséquent, la solution proposée permet une forte anticipation puisque le procédé est exécuté pendant la mission courante de l'aéronef, c'est-à-dire avant que l'aéronef se pose et que débute le temps de rotation de l'aéronef (TAT). Par conséquent, la solution proposée permet :
- de s'affranchir du besoin d'avoir un mécanicien au sol, et ne pas impacter le temps de rotation de l'aéronef (TAT), pour l'évaluation de la possibilité de départ sous élément MEL pour les missions suivantes de l'aéronef ;
- d'anticiper l'évaluation de la possibilité de départ sous élément MEL ; et
- à l'opérateur (compagnie aérienne) d'anticiper la tenue ou l'adaptation des plannings des vols (missions) de sa flotte d'aéronefs ; en particulier, l'opérateur peut répartir au mieux un ensemble de missions futures sur sa flotte d'aéronefs, en tenant compte, pour chaque aéronef présentant une défaillance en cours de mission, du ou des élément(s) MEL impliqué(s) et de la ou les option(s) de départ applicable(s). Cela permet en outre d'alléger la charge de travail de l'opérateur.

Elle permet de s'affranchir (partiellement ou complètement) du besoin d'avoir un mécanicien au sol pour reconfigurer l'aéronef en cas de départ sous élément MEL pour les missions suivantes de l'aéronef.

Elle permet également de faciliter l'analyse de la situation par les pilotes des vols suivants de l'aéronef lors de leur préparation desdits vols suivants.

Selon un mode de réalisation particulier, en cas de décision de départ sous le ou les éléments MEL impliqués, la proposition de scénario comprend, pour chaque élément MEL impliqué, au moins une option de départ sélectionnée parmi un groupe d'au moins deux options de départ applicables qui sont exclusives l'une de l'autre.

Selon un mode de réalisation particulier, le deuxième calculateur est implémenté dans un centre de contrôle de maintenance et / ou dans un centre de contrôle opérationnel.

Selon un mode de réalisation particulier, en cas de décision d'acceptation de la proposition de scénario par le pilote, le troisième calculateur déclenche une réalisation automatique d'au moins une tâche parmi la ou les éventuelles tâches à effectuer dans l'aéronef.

Selon un mode de réalisation particulier, la au moins une tâche dont le troisième calculateur déclenche une réalisation automatique correspond à la ou les reconfigurations de systèmes à réaliser.

Selon un mode de réalisation particulier, le procédé comprend en outre, dans le troisième calculateur : transmettre au deuxième calculateur la décision du pilote de l'aéronef et, en cas de décision d'acceptation, transmettre le statut d'exécution de la ou les éventuelles tâches à effectuer dans l'aéronef.

Selon un mode de réalisation particulier, la base de données comprenant la liste minimale d'équipements est une base de données contextualisée dont le contenu :
- résulte d'un filtrage, en fonction dudit aéronef, d'une liste minimale d'équipements complète et commune à une pluralité d'aéronefs comprenant ledit aéronef ; et
- est limité aux informations nécessaires à l'implémentation du procédé dans les premier, deuxième et troisième calculateurs.

Selon un mode de réalisation particulier, le procédé comprend en outre, dans le premier calculateur :
- si l'aéronef est déjà dans un état opérationnel courant indiquant une précédente décision de départ sous au moins un élément MEL :
   - détecter d'éventuels conflits d'un premier type entre :
      o le ou les équipements ou la ou les fonctions de l'aéronef qui sont déjà considéré(e)s inopérant(e)s car concerné(e)s par le ou les éléments MEL sous lesquels a été réalisée la précédente décision de départ ; et
      o le ou les équipements ou la ou les fonctions de l'aéronef qui doivent être non-inopérant(e)s pour rendre applicables la ou les options de départ définies dans le ou les éléments MEL impliqués que le premier calculateur a déterminés ; et
   - si un conflit du premier type est détecté, pour un équipement ou une fonction qui devrait être non-inopérant(e) pour rendre applicable une nouvelle option de départ donnée mais qui est déjà considéré(e) inopérant(e), ladite nouvelle option de départ donnée est déclarée non-applicable.

Selon un mode de réalisation particulier, le procédé comprend en outre, dans le premier calculateur :
- si l'aéronef est déjà dans un état opérationnel courant indiquant une précédente décision de départ sous au moins un élément MEL :
   - détecter d'éventuels conflits d'un deuxième type entre :
      o le ou les équipements ou la ou les fonctions de l'aéronef qui doivent être non-inopérant(e)s pour maintenir applicables une ou des options de départ préalablement sélectionnées, lors d'une itération précédente du procédé, et définies dans le ou les éléments MEL sous lesquels est réalisée la précédente décision de départ ; et
      o le ou les équipements ou la ou les fonctions de l'aéronef qui sont désormais considéré(e)s inopérant(e)s car concerné(e)s par le ou les éléments MEL impliqués que le premier calculateur a déterminés ; et
   - si un conflit du deuxième type est détecté, pour un équipement ou une fonction qui devrait être non-inopérante(e) pour maintenir applicable une ancienne option de départ donnée mais qui est désormais considéré(e) inopérant(e), ladite ancienne option de départ donnée est déclarée non-applicable.

Il est aussi proposé un système d'aide à la décision d'exploitation d'un aéronef, le système comprenant :
- un premier calculateur, implémenté dans l'aéronef ou dans une sacoche électronique ou au sol, et comprenant une circuiterie électronique configurée pour implémenter les opérations qui lui sont affectées dans le procédé précité, dans l'un quelconque de ses modes de réalisation ;
- un deuxième calculateur, installé au sol et comprenant une circuiterie électronique configurée pour implémenter les opérations qui lui sont affectées dans le procédé précité, dans l'un quelconque de ses modes de réalisation ;
- un troisième calculateur, implémenté dans l'aéronef ou dans une sacoche électronique, et comprenant une circuiterie électronique configurée pour implémenter les opérations qui lui sont affectées dans le procédé précité, dans l'un quelconque de ses modes de réalisation.

Il est aussi proposé un produit programme d'ordinateur comportant des instructions entraînant l'exécution, par des processeurs compris dans des premier, deuxième et troisième calculateurs, du procédé précité, dans l'un quelconque de ses modes de réalisation, lorsque lesdites instructions sont exécutées par lesdits processeurs.

Il est aussi proposé un support de stockage, stockant de telles instructions.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un système d'aide à la décision d'exploitation d'un aéronef, selon un mode de réalisation particulier comprenant des premier et troisième calculateurs implémentés dans l'aéronef et un deuxième calculateur implémenté au sol ;
[Fig. 2] illustre schématiquement un exemple d'architecture matérielle d'un calculateur générique, pouvant correspondre à chacun des calculateurs du système de la Fig. 1 ;
[Fig. 3] illustre schématiquement un exemple d'algorithme d'aide à la décision d'exploitation d'un aéronef, selon un mode de réalisation particulier ; et
[Fig. 4] illustre schématiquement un exemple d'élément MEL.

### EXPOSE DETAILLE DE MODES DE REALISATION

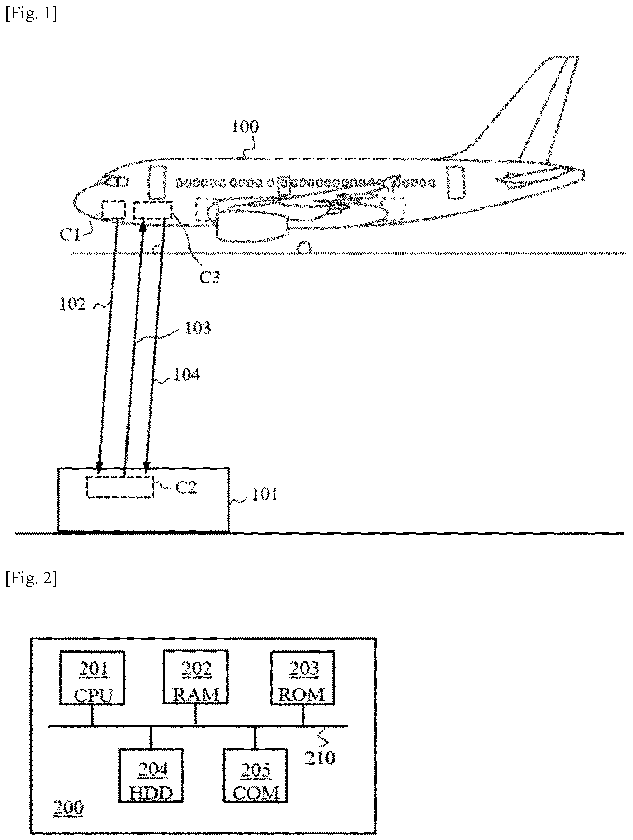

La Fig. 1 illustre schématiquement un système d'aide à la décision d'exploitation d'un aéronef, selon un mode de réalisation particulier comprenant des premier et troisième calculateurs (référencés C1 et C3 respectivement) implémentés dans l'aéronef 100 et un deuxième calculateur (référencé C2) implémenté au sol, dans un centre de contrôle 101.

Le calculateur C1 et/ou le calculateur C3 est (sont) par exemple implémenté(s) dans le système d'alerte en vol (FWS, pour « Flight Warning System » en anglais) de l'aéronef 100, ou dans un autre système (ou application) capable d'échanger des données avec le FWS.

Le centre de contrôle 101 (au sol), dans lequel est implémenté le calculateur C2, est par exemple un centre de contrôle de maintenance (MCC, pour « Maintenance Control Center » en anglais) ou un centre de contrôle opérationnel (OCC, pour « Operational Control Center » en anglais).

Dans une variante, le calculateur C1 et/ou le calculateur C3 est (sont) implémenté(s) dans une sacoche de vol électronique (EFB, pour « Electronic Fligh Bag » en anglais). Dans une autre variante, les calculateurs C1 et C3 sont réunis dans un même calculateur, implémenté dans l'aéronef ou dans l'EFB. Dans une autre variante, le calculateur C1 est implémenté au sol, comme le calculateur C2. Dans une autre variante, les calculateurs C1 et C2 sont réunis dans un même calculateur implémenté au sol.

Chacun des calculateurs, C1, C2 et C3 comprend une circuiterie électronique dont un mode de réalisation est détaillé ci-dessous, en relation avec la Fig. 2.

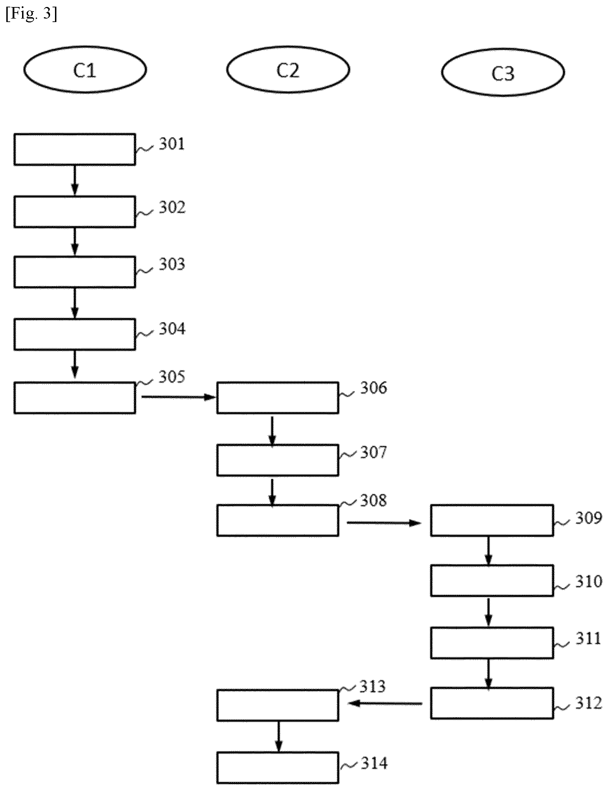

Les échanges entre les calculateurs, illustrés par des flèches référencées 102, 103 et 104, sont détaillés ci-dessous, en relation avec la Fig. 3.

La Fig. 2 illustre schématiquement un exemple d'architecture matérielle d'un calculateur générique 200, pouvant correspondre à chacun des calculateurs C1, C2 et C3 du système de la Fig. 1. Le calculateur 200 comprend, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203, par exemple une mémoire Flash ; un dispositif de stockage de données, tel qu'un disque dur HDD (« Hard Disk Drive » en anglais), ou un lecteur de support de stockage, tel qu'un lecteur de cartes SD (« Secure Digital » en anglais) 204 ; au moins une interface de communication 205.

Le processeur 201 est capable d'exécuter des instructions chargées dans la RAM 202 à partir de la ROM 203, d'une mémoire externe (non représentée), d'un support de stockage, tel qu'une carte SD, ou d'un réseau de communication (non représenté). Lorsque le calculateur 200 est mis sous tension, le processeur 201 est capable de lire de la RAM 202 des instructions et de les exécuter. Ces instructions forment un programme d'ordinateur causant la mise en œuvre, par le processeur 201, des comportements, étapes et algorithme décrits ici. Chacun des calculateurs C1, C2 et C3 exécute un programme d'ordinateur différent, définissant les opérations affectées à ce calculateur dans le procédé (algorithme) d'aide à la décision d'exploitation d'un aéronef, par exemple selon le mode de réalisation décrit ci-dessous en relation la Fig. 3.

Tout ou partie des comportements, étapes et algorithme décrits ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). D'une manière générale, le calculateur 200 comprend de la circuiterie électronique agencée et configurée pour implémenter les comportements, étapes et algorithmes décrits ici (qui diffèrent pour chacun des calculateurs C1, C2 et C3).

La Fig. 3 illustre schématiquement un exemple d'algorithme d'aide à la décision d'exploitation d'un aéronef, selon un mode de réalisation particulier.

L'algorithme (procédé) est implémenté par les calculateurs C1, C2 et C3, discutés ci-dessus en relation avec les Fig. 1 et 2. Le calculateur C1 exécute les étapes 301 à 305. Le calculateur C2 exécute les étapes 306 à 308, 313 et 314. Le calculateur C3 exécute les étapes 309 à 312.

Il est exécuté pendant une mission courante de l'aéronef 100. On suppose dans la suite de la description qu'une défaillance technique se produit au cours de cette mission courante.

Dans l'étape 301, le calculateur C1 reçoit une information de défaillance, mentionnant au moins une défaillance technique de l'aéronef.

Dans l'étape 302, pour chaque défaillance technique mentionnée, le calculateur C1 détermine, par consultation d'une base de données MEL (c'est-à-dire une base de données comprenant une liste minimale d'équipements (MEL)), un ou plusieurs éléments de la MEL (dits éléments MEL) impliqués par la défaillance technique. Chaque élément MEL impliqué concerne un équipement ou une fonction inopérant(e) de l'aéronef et définit une ou plusieurs options de départ (dispatch conditions) de l'aéronef pour une éventuelle mission à venir.

Dans une première implémentation, la détermination du ou des éléments MEL impliqués par la défaillance technique découle simplement de la réception des messages de départ (DM, pour « Dispatch Messages » en anglais) que le FWS émet en plus des alertes ECAM. En effet, pour déterminer les messages DM, le FWS reçoit des données de pannes provenant des systèmes et il analyse ces données. Les messages DM permettent de renvoyer directement à un élément MEL unique. Dans ce cas, les alertes ECAM servent pour la conduite du vol en cours et les messages DM pour les impacts sur les vols suivants.

Dans une deuxième implémentation, la détermination du ou des éléments MEL impliqués par la défaillance technique est basée sur les alertes ECAM.

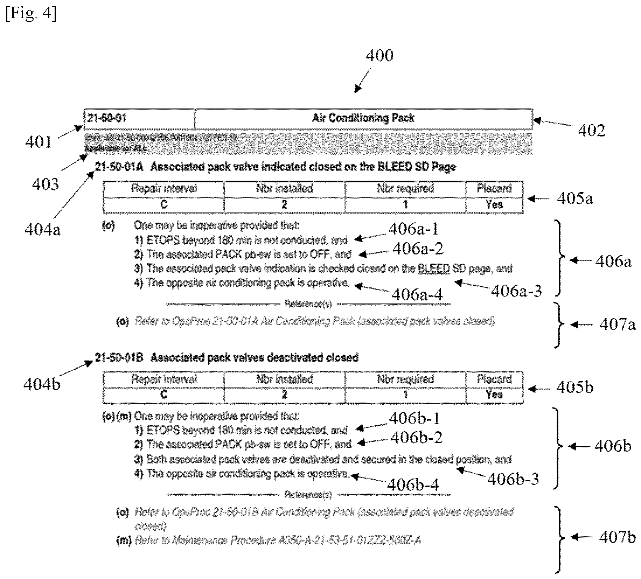

La Fig. 4 illustre schématiquement un exemple d'élément MEL 400. Cet exemple d'élément MEL 400 concerne le pack de climatisation et comprend un identifiant (« 21-50-01 ») référencé 401, un libellé (« Air Conditioning Pack ») référencé 402, une information d'effectivité (« Applicable to ALL ») référencée 403 et deux options de départs référencées (dispatch conditions) 404a et 404b.

La première option de départ 404a comprend elle-même :
- un identifiant et un libellé (« 21-50-01A » et « Associated pack valve indicated closed on the BLEED SD Page ») ;
- une table 405a comprenant :
   o le type (ici « C ») de l'intervalle de réparation (« Repair interval ») ;
   o le nombre d'occurrence (ici « 2 ») de l'équipement ou de la fonction objet de la défaillance, ici le pack de climatisation (« Nbr installed ») ;
   o le nombre minimal (ici « 1 ») d'occurrence nécessaire au vol sous dérogation (« Nbr required ») ; et
   o un indicateur (ici « Yes ») de la nécessité d'apposer une étiquette (« Placard ») ;
- une liste 406a de conditions (« provisos » en anglais) d'application de cette première option de départ, comprenant :
   o une première condition (406a-1) de type limitation opérationnelle (ici : « ETOPS beyond 180 min is not conducted ») ;
   o une deuxième condition (406a-2) de type reconfiguration (ici : « The associated PACKpb-sw is set to OFF ») ;
   o une troisième condition (406a-3) de type vérification (ici : « The associated pack valve indication is checked closed on the BLEED SD page ») ;
   o une quatrième condition (406a-4) de type condition technique formulée avec l'expression « is operative » (ici : « The opposite air conditioning pack is operative ») ; et
- une référence de procédure 407a (ici une référence de procédure opérationnelle (o)).

La deuxième option de départ 404b comprend elle-même :
- un identifiant et un libellé (« 21-50-01B » et « Associated pack valves deactivated closed ») ;
- une table 405b (identique à la table 405a décrite plus haut pour la première option de départ 404a) ;
- une liste 406b de conditions (« provisos » en anglais) d'application de cette deuxième option de départ, comprenant :
   o une première condition (406b-1) de type limitation opérationnelle et une deuxième condition (406b-2) de type reconfiguration (identiques respectivement au première 406a-1 et deuxième 406a-2 conditions de la liste 406a décrite pour la première option de départ 404a) ;
   o une troisième condition (406b-3) de type reconfiguration (ici : « Both associated pack valves are deactivated and secured in the closed position ») ;
   o une quatrième condition (406b-4) de type condition technique formulée avec l'expression « is operative » (identique à la quatrième condition 406a-4 de la liste 406a décrite pour la première option de départ 404a) ; et
- deux références de procédure 407b (ici une référence de procédure opérationnelle (o) et une référence de procédure de maintenance (m)).

Préalablement au procédé décrit ici, la base de données MEL a été stockée à bord de l'aéronef 100. Elle peut être commune à tous les aéronefs du même type de la compagnie aérienne. Elle est mise à jour régulièrement.

Dans un mode de réalisation particulier, afin de rendre la lecture informatique des informations plus rapide, la base de données MEL est une base de données contextualisée, notée cMEL, dont le contenu résulte d'un filtrage, en fonction de l'aéronef 100 (c'est-à-dire en fonction de son numéro de série MSN, pour « Manufacturer Serial Number »), d'une MEL complète et commune à une pluralité d'aéronefs comprenant cet aéronef 100. Pour réaliser ce filtrage, l'effectivité est recherchée dans le champ « applicability » de la MEL. En outre, le contenu de la cMEL est limité aux informations nécessaires à l'implémentation du procédé dans les premier, deuxième et troisième calculateurs. Une nouvelle base de données MEL contextualisée est par exemple créée à chaque mise à jour de la base de données MEL.

Nous revenons maintenant à la description de la Fig. 3.

Dans l'étape 303, le calculateur C1 reçoit un statut technique de l'aéronef, comprenant des données techniques relatives à des défaillances d'équipements ou de fonctions de l'aéronef.

Dans l'étape 304, pour chaque élément MEL impliqué, le calculateur C1 détermine, en fonction du statut technique de l'aéronef, une ou plusieurs options de départ applicables parmi la ou les options de départ définies dans cet élément MEL impliqué.

Comme déjà expliqué plus haut, en relation avec la Fig. 4, chaque élément MEL comprend une ou plusieurs options de départ (dispatch conditions) et chaque option de départ comprend elle-même une liste de conditions (provisos) d'application de cette option de départ.

Dans un mode de réalisation, la liste des conditions (provisos) est codée dans la base de données MEL contextualisée cMEL, afin que les données MEL soient codées sous forme informatique et qu'elles puissent être calculées. Chaque condition de la liste des conditions (provisos), qui est du type condition technique formulée avec l'expression « is operative » (c'est-à-dire se rapporte à un système (équipement ou fonction) qui doit être opérationnel (non inopérant) pour appliquer cette option de départ (dispatch condition), est traduit dans la cMEL comme un élément MEL du type "NOGO_IF". Si l'aéronef considéré est déjà sous cet élément MEL du type "NOGO_IF", alors la option de départ ne peut pas être applicable. L'ensemble des éléments MEL de l'aéronef considéré, ainsi que les éléments MEL du type NOGO_IF des options de départ applicables, sont stockés en mémoire non volatile dans une table des éléments MEL actifs (par exemple nommée "active DMs file").

Dans un mode de réalisation particulier de l'étape 304, le calculateur C1 effectue une analyse automatique des conflits (d'un premier type et/ou d'un deuxième type) si l'aéronef est déjà sous élément(s) MEL, c'est-à-dire si l'aéronef est déjà dans un état opérationnel courant indiquant une précédente décision de départ sous au moins un élément MEL (cette précédente décision de départ ayant été acceptée par le pilote de l'aéronef avant le décollage de la présente mission courante).

On appelle conflits du premier type les conflits entre :
- le ou les équipements ou la ou les fonctions de l'aéronef qui sont déjà considéré(e)s inopérant(e)s car concerné(e)s par le ou les éléments MEL sous lesquels a été réalisée la précédente décision de départ ; et
- le ou les équipements ou la ou les fonctions de l'aéronef qui doivent être non-inopérant(e)s pour rendre applicables la ou les options de départ définies dans le ou les éléments MEL impliqués que le calculateur C1 a déterminés.

Si un conflit du premier type est détecté par le calculateur C1, pour un équipement ou une fonction qui devrait être non-inopérant(e) pour rendre applicable une nouvelle option de départ donnée mais qui est déjà considéré(e) inopérant(e), cette nouvelle option de départ donnée est déclarée non-applicable.

On appelle conflits du deuxième type les conflits entre :
- le ou les équipements ou la ou les fonctions de l'aéronef qui doivent être non-inopérant(e)s pour maintenir applicables une ou des options de départ préalablement sélectionnées, lors d'une itération précédente du procédé (exécutée lors d'une précédente mission de cet aéronef), et définies dans le ou les éléments MEL sous lesquels est réalisée la précédente décision de départ ; et
- le ou les équipements ou la ou les fonctions de l'aéronef qui sont désormais considéré(e)s inopérant(e)s car concerné(e)s par le ou les éléments MEL impliqués que le calculateur C1 a déterminés.

Si un conflit du deuxième type est détecté par le calculateur C1, pour un équipement ou une fonction qui devrait être non-inopérante(e) pour maintenir applicable une ancienne option de départ donnée mais qui est désormais considéré(e) inopérant(e), cette ancienne option de départ donnée est déclarée non-applicable.

Dans l'étape 305, le calculateur C1 transmet au calculateur C2 les éléments déterminés à l'étape 304. Cet échange du calculateur C1 vers le calculateur C2 est illustré sur la Fig. 1 par la flèche référencée 102.

L'exécution des étapes 301 à 305 par le calculateur C1 revient donc à réaliser une évaluation de départ technique (TDA, pour « Technical Dispatch Assessment » en anglais).

Dans l'étape 306, le calculateur C2 reçoit, en provenance du calculateur C1, la ou les options de départ applicables pour chaque élément MEL impliqué.

Dans l'étape 307, le calculateur C2 détermine une proposition de scénario, en fonction d'une part de la ou les options de départ applicables pour chaque élément MEL impliqué et d'autre part d'un ensemble de missions futures à répartir sur une flotte d'aéronefs comprenant l'aéronef 100 (celui réalisant la mission courante).

La proposition de scénario comprend :
- une décision de réparation de l'aéronef (par exemple suite à une analyse en amont de l'impact opérationnel d'un départ sous élément(s) MEL) ou de départ de l'aéronef sous le ou les éléments MEL impliqués ; et
- en cas de décision de départ sous le ou les éléments MEL impliqués :
   o une ou plusieurs missions futures attribuées à l'aéronef ;
   o pour chaque élément MEL impliqué, une ou plusieurs options de départ sélectionnées parmi la ou les options de départ applicables ; et
   o une ou plusieurs éventuelles tâches à effectuer dans l'aéronef, appartenant au groupe comprenant :
      ▪ une ou des reconfigurations de systèmes à réaliser (automatiquement ou par le pilote) ;
      ▪ une ou des limitations opérationnelles à respecter (par exemple pas d'ETOPS (« Extended-range Twin-engine Operational Performance Standards » en anglais), pas de conditions givrantes, augmentation de la consommation de carburant, etc.) ; et
      ▪ une ou des inspections ou vérifications à effectuer.

Dans un mode de réalisation particulier, la proposition de scénario comprend, pour chaque élément MEL impliqué, au moins une option de départ sélectionnée parmi un groupe d'au moins deux options de départ applicables qui sont exclusives l'une de l'autre.

Dans l'étape 308, le calculateur C2 transmet au calculateur C3 les éléments déterminés à l'étape 307. Cet échange du calculateur C2 vers le calculateur C3 est illustré sur la Fig. 1 par la flèche référencée 103.

L'exécution des étapes 306 à 308 par le calculateur C2 revient donc à réaliser une évaluation de départ opérationnelle (ODA, pour « Operational Dispatch Assessment » en anglais), ainsi qu'une prise de décision (« Decision Making » en anglais).

Dans l'étape 309, le calculateur C3 reçoit, en provenance du calculateur C2, la proposition de scénario.

Dans l'étape 310, le calculateur C3 reçoit (via une interface homme-machine) une décision du pilote de l'aéronef, d'acceptation ou de refus de la proposition de scénario.

Dans l'étape 311, en cas de décision d'acceptation, le calculateur C3 déclenche la réalisation de la ou les éventuelles tâches à effectuer dans l'aéronef. A la fin du vol les éléments suivants sont mentionnés dans le journal de bord (logbook) de l'aéronef (soit manuellement par le pilote, soit de façon automatique) :
- la au moins une défaillance technique de l'aéronef ;
- un nouvel état opérationnel courant de l'aéronef, indiquant la décision de départ sous le ou les éléments MEL impliqués pour la ou les missions futures attribuées à l'aéronef ;
- pour chaque élément MEL impliqué, la ou les options de départ sélectionnées parmi la ou les options de départ applicables ; et
- un statut d'exécution (pouvant par exemple prendre une des valeurs suivantes : « terminé et bon », « non commencé », « échoué » et « en attente ») de la ou les éventuelles tâches à effectuer dans l'aéronef.

Ainsi, les pilotes des vols suivants (missions suivantes) de l'aéronef consulteront le journal de bord et vérifieront le statut de l'aéronef, les limitations opérationnelles, les besoins de recalculer la performance et prendront connaissance des procédures opérationnelles (o) manuelles à effectuer. Pour mémoire, dans une implémentation particulière, certaines procédures opérationnelles (o) seront lancées de façon automatique, en plus des procédures opérationnelles standard (SOP).

Dans un mode de réalisation particulier de l'étape 311, le calculateur C3 déclenche une réalisation automatique (pendant le vol en cours) d'au moins une tâche (parmi la ou les éventuelles tâches à effectuer dans l'aéronef pour le départ sous élément(s) MEL de la prochaine mission), par exemple la ou les reconfigurations de systèmes à réaliser (par exemple fermer une vanne ou ouvrir un disjoncteur électronique (eC/B, pour « Electronic Circuit Breaker » en anglais)). La ou les procédures opérationnelles (o) seront exécutées lors des vols suivants.

Dans l'étape 312, le calculateur C3 transmet au calculateur C2 la décision du pilote de l'aéronef et, en cas de décision d'acceptation, le statut d'exécution de la ou les éventuelles tâches à effectuer dans l'aéronef. Cet échange du calculateur C3 vers le calculateur C2 est illustré sur la Fig. 1 par la flèche référencée 104.

Dans l'étape 313, le calculateur C2 reçoit, en provenance du calculateur C3, les éléments transmis par ce dernier à l'étape 312.

Dans l'étape 314, le calculateur C2 (et donc le centre de contrôle 101 (MCC ou OCC par exemple) enregistre, par exemple dans une table, le fait que l'aéronef est parti ou est resté au sol pour réparation, et en cas de départ il enregistre également le fait qu'il s'agit d'un départ sous élément(s) MEL, en précisant la ou les options de départ qui ont été sélectionnées (avec éventuellement les impacts opérationnels). Les tâches manuelles restant à effectuer sont également enregistrées. Une fois celles-ci effectuées, on peut considérer que la mise sous MEL est effective. Ainsi, le centre de contrôle 101 peut ensuite planifier la réparation avant la fin de l'intervalle autorisé.

## Revendications

1. Procédé d'aide à la décision d'exploitation d'un aéronef (100), le procédé étant exécuté pendant une mission courante de l'aéronef et comportant :
• dans un premier calculateur (C1), implémenté dans l'aéronef ou dans une sacoche électronique ou au sol, et comprenant une circuiterie électronique :
- recevoir (301) une information de défaillance, mentionnant au moins une défaillance technique de l'aéronef ;
- pour chaque défaillance technique mentionnée, déterminer (302), par consultation d'une base de données comprenant une liste minimale d'équipements, un ou plusieurs éléments de la liste minimale d'équipements, dits éléments MEL (400), impliqués par ladite défaillance technique, chaque élément MEL impliqué concernant un équipement ou une fonction inopérant(e) de l'aéronef et définissant une ou plusieurs options de départ (404a, 404b) de l'aéronef pour une éventuelle mission à venir ;
- recevoir (303) un statut technique de l'aéronef, comprenant des données techniques relatives au fonctionnement d'équipements ou de fonctions de l'aéronef ; et
- pour chaque élément MEL impliqué, déterminer (304), en fonction du statut technique de l'aéronef, une ou plusieurs options de départ applicables parmi la ou les options de départ définies dans ledit élément MEL impliqué ;
• dans un deuxième calculateur (C2), installé au sol et comprenant une circuiterie électronique :
- recevoir (306), en provenance du premier calculateur (C1), la ou les options de départ applicables pour chaque élément MEL impliqué ; et
- déterminer (307) une proposition de scénario, en fonction d'une part de la ou les options de départ applicables pour chaque élément MEL impliqué et d'autre part d'un ensemble de missions futures à répartir sur une flotte d'aéronefs comprenant ledit aéronef, ladite proposition de scénario comprenant : une décision de réparation de l'aéronef ou de départ de l'aéronef sous le ou les éléments MEL impliqués et, en cas de décision de départ sous le ou les éléments MEL impliqués : une ou plusieurs missions futures attribuées à l'aéronef ; pour chaque élément MEL impliqué, une ou plusieurs options de départ sélectionnées parmi la ou les options de départ applicables ; et une ou plusieurs éventuelles tâches à effectuer dans l'aéronef, appartenant au groupe comprenant : une ou des reconfigurations de systèmes à réaliser, une ou des limitations opérationnelles à respecter, et une ou des inspections ou vérifications à effectuer ;
• dans un troisième calculateur (C3), implémenté dans l'aéronef ou dans une sacoche électronique, et comprenant une circuiterie électronique :
- recevoir (309), en provenance du deuxième calculateur (C2), la proposition de scénario ;
- recevoir (310) une décision d'un pilote de l'aéronef, d'acceptation ou de refus de la proposition de scénario ; et
- en cas de décision d'acceptation, déclencher (311) la réalisation de la ou les éventuelles tâches à effectuer dans l'aéronef et mentionner dans un journal de bord : ladite au moins une défaillance technique de l'aéronef ; un nouvel état opérationnel courant de l'aéronef indiquant la décision de départ sous le ou les éléments MEL impliqués pour la ou les missions futures attribuées à l'aéronef ; pour chaque élément MEL impliqué, la ou les options de départ sélectionnées parmi la ou les options de départ applicables ; et un statut d'exécution de la ou les éventuelles tâches à effectuer dans l'aéronef.

2. Procédé selon la revendication 1, dans lequel, en cas de décision de départ sous le ou les éléments MEL impliqués, la proposition de scénario comprend, pour chaque élément MEL impliqué, au moins une option de départ sélectionnée parmi un groupe d'au moins deux options de départ applicables qui sont exclusives l'une de l'autre.

3. Procédé selon l'une quelconque des revendications 1 et 2, dans lequel le deuxième calculateur (C2) est implémenté dans un centre de contrôle de maintenance (101) et / ou dans un centre de contrôle opérationnel (101).

4. Procédé selon l'une quelconque des revendications 1 à 3, dans lequel, en cas de décision d'acceptation de la proposition de scénario par le pilote, le troisième calculateur (C3) déclenche une réalisation automatique (311) d'au moins une tâche parmi la ou les éventuelles tâches à effectuer dans l'aéronef.

5. Procédé selon la revendication 4, dans lequel la au moins une tâche dont le troisième calculateur (C3) déclenche une réalisation automatique correspond à la ou les reconfigurations de systèmes à réaliser.

6. Procédé selon l'une quelconque des revendications 1 à 5, comprenant en outre, dans le troisième calculateur (C3) :
• transmettre (312) au deuxième calculateur (C2) la décision du pilote de l'aéronef et, en cas de décision d'acceptation, transmettre le statut d'exécution de la ou les éventuelles tâches à effectuer dans l'aéronef.

7. Procédé selon l'une quelconque des revendications 1 à 6, dans lequel la base de données comprenant la liste minimale d'équipements est une base de données contextualisée dont le contenu :
• résulte d'un filtrage, en fonction dudit aéronef, d'une liste minimale d'équipements complète et commune à une pluralité d'aéronefs comprenant ledit aéronef ; et
• est limité aux informations nécessaires à l'implémentation du procédé dans les premier, deuxième et troisième calculateurs.

8. Procédé selon l'une quelconque des revendications 1 à 7, comprenant en outre, dans le premier calculateur (C1) :
• si l'aéronef (100) est déjà dans un état opérationnel courant indiquant une précédente décision de départ sous au moins un élément MEL :
- détecter (304) d'éventuels conflits d'un premier type entre :
o le ou les équipements ou la ou les fonctions de l'aéronef qui sont déjà considéré(e)s inopérant(e)s car concerné(e)s par le ou les éléments MEL sous lesquels a été réalisée la précédente décision de départ ; et
o le ou les équipements ou la ou les fonctions de l'aéronef qui doivent être non-inopérant(e)s pour rendre applicables la ou les options de départ définies dans le ou les éléments MEL impliqués que le premier calculateur a déterminés ; et
- si un conflit du premier type est détecté, pour un équipement ou une fonction qui devrait être non-inopérant(e) pour rendre applicable une nouvelle option de départ donnée mais qui est déjà considéré(e) inopérant(e), ladite nouvelle option de départ donnée est déclarée non-applicable (304).

9. Procédé selon l'une quelconque des revendications 1 à 8, comprenant en outre, dans le premier calculateur :
• si l'aéronef (100) est déjà dans un état opérationnel courant indiquant une précédente décision de départ sous au moins un élément MEL :
- détecter (304) d'éventuels conflits d'un deuxième type entre :
o le ou les équipements ou la ou les fonctions de l'aéronef qui doivent être non-inopérant(e)s pour maintenir applicables une ou des options de départ préalablement sélectionnées, lors d'une itération précédente du procédé, et définies dans le ou les éléments MEL sous lesquels est réalisée la précédente décision de départ ; et
o le ou les équipements ou la ou les fonctions de l'aéronef qui sont désormais considéré(e)s inopérant(e)s car concerné(e)s par le ou les éléments MEL impliqués que le premier calculateur a déterminés ; et
- si un conflit du deuxième type est détecté, pour un équipement ou une fonction qui devrait être non-inopérante(e) pour maintenir applicable une ancienne option de départ donnée mais qui est désormais considéré(e) inopérant(e), ladite ancienne option de départ donnée est déclarée non-applicable (304).

10. Système d'aide à la décision d'exploitation d'un aéronef (100), le système comprenant :
• un premier calculateur (C1), implémenté dans l'aéronef ou dans une sacoche électronique ou au sol, et comprenant une circuiterie électronique configurée pour implémenter les opérations qui lui sont affectées dans le procédé selon l'une quelconque des revendications 1 à 9 ;
• un deuxième calculateur (C2), installé au sol et comprenant une circuiterie électronique configurée pour implémenter les opérations qui lui sont affectées dans le procédé selon l'une quelconque des revendications 1 à 9 ; et
• un troisième calculateur (C3), implémenté dans l'aéronef ou dans une sacoche électronique, et comprenant une circuiterie électronique configurée pour implémenter les opérations qui lui sont affectées dans le procédé selon l'une quelconque des revendications 1 à 9.

11. Produit programme d'ordinateur, comportant des instructions entraînant l'exécution, par des processeurs (201) compris dans des premier, deuxième et troisième calculateurs (C1, C2, C3), du procédé selon l'une quelconque des revendications 1 à 9, lorsque lesdites instructions sont exécutées par lesdits processeurs.
